# EUROPÄISCHE PATENTSCHRIFT

(11) **EP 0 582 241 B1**
(45) Veröffentlichungstag und Bekanntmachung des Hinweises auf die Patenterteilung: **10.04.1996**
(21) Anmeldenummer: 93112326.9
(22) Anmeldetag: 31.07.1993
(51) Int. Cl.: B65B 67/12

(54) **Wäschesackständer**
Stand for laundry bags
Bâti pour sacs pour la lessive

(30) Priorität: 06.08.1992 DE 4225937
(43) Veröffentlichungstag der Anmeldung: 09.02.1994
(73) Patentinhaber: HAMMERLIT GMBH, D-26789 Leer/Ostfriesland (DE)
(72) Erfinder: Meseke, Curt Th., D-2950 Leer/Ostfriesland (DE); Winkler, Winfried, D-5100 Aachen (DE)
(74) Vertreter: Rehders, Jochen, Dipl.-Ing.

(56) Entgegenhaltungen:
- DE-B- 2 155 350
- GB-A- 835 225
- US-A- 3 603 542

## Beschreibung

Die Erfindung betrifft einen Wäschesackständer, der ggf. mehrere Tragringe zum Einhängen von Wäschesäcken aufweist und bevorzugt in Krankenhäusern, Altersheimen oder dergleichen eingesetzt wird, um verschmutzte oder insbesondere auch kontaminierte Wäsche, ggf. auch Feuchtwäsche einzusammeln und zu einer zentralen Waschanlage zu bringen.

In der deutschen Gebrauchsmusterschrift G 81 25 659.0 ist ein derartiger Wäschesackständer beschrieben, der aus einem zu einem einseitig offenen Rahmen gebogenen Fußteil, zwei nach oben gebogenen Streben und einem daran mittig befestigten Tragring besteht. Dieser Wäschesackständer läßt sich mit geeigneten Verriegelungselementen zu einem Mehrfach-Wäschesackständer vereinigen und hat sich im Gebrauch lange Zeit bewährt, jedoch ist die Herstellung aufwendig, da der Tragring an den Streben angeschweißt oder angeschraubt werden muß. Soll dieser Wäschesackständer mit Laufrollen versehen werden, lassen sich diese nur an den den einseitig offenen Rahmen im Bodenbereich bildenden Rohren befestigen, was umständlich ist und unter Umständen zu einer Schwächung des Rahmens in diesem Bereich führt. Des weiteren weist dieser Wäschesackständer keine Bodenplatte auf, so daß beim Einsammeln von Feuchtwäsche die Gefahr besteht, daß der Boden durch aus dem Sack heraustropfende Flüssigkeit verschmutzt wird. Da dieser Wäschesackständer einteilig ist, nimmt er für den Transport sehr viel Raum in Anspruch.

Bei einem weiteren, aus der deutschen Gebrauchsmusterschrift G 82 35 562.2 bekannten Wäschesackständer ist zwar eine Bodenplatte aus Kunststoff vorhanden, an denen Laufräder befestigt sind, jedoch weist dieser Wäschesackständer eine ungenügende Stabilität auf und ist in der Herstellung kostspielig, da zwei U-förmige Rohrbügel mit ihren senkrechten Enden in die Bodenplatte eingesteckt und mit den Tragrollen verschraubt werden müssen. Um einen Wäschesack mit seinem Rand über einen an den oberen Querschenkeln der U-förmigen Rohrbügel befestigten Tragring überstülpen zu können, muß die Befestigung des Tragrings U-förmig nach unten abgebogen und wieder zu den Querschenkeln hochgeführt sein, so daß auf diese Weise der Tragring frei im Bereich zwischen den Querschenkeln steht. Der Tragring ist mit den U-förmigen Bügeln einstückig aus Kunststoff hergestellt, läßt sich dadurch leicht verformen und gibt dem Wäschesackständer eine ungenügende Stabilität, die noch dadurch verschlechtert wird, daß die unteren Enden der senkrechten Schenkel nur durch die relativ schmale Bodenplatte hindurchgesteckt sind und durch die Bodenplatte ungenügend gegen Verwindung und Verbiegung gehalten sind. Im Bereich der Befestigung der Rohrbügel an der Bodenplatte treten daher erhöhte Beanspruchungen auf, die leicht zu einem Bruch der Bodenplatte im Eckbereich führen können. Die vier Streben der U-förmigen Bügel behindern das Herausnehmen eines vollen Sackes.

Der Erfindung liegt die Aufgabe zugrunde, einen Wäschesackständer zu schaffen, der bei einfacher und kostengünstiger Herstellung eine ausreichende Stabilität aufweist und sich leicht montieren und demontieren läßt.

Ausgehend von dieser Aufgabenstellung wird ein Wäschesackständer vorgeschlagen, bestehend aus einem Tragring, einer Bodenplatte aus Kunststoff, gekennzeichnet durch zwei L-förmige etwa senkrechte Tragstreben, deren obere Enden mit dem Tragring und deren untere etwa waagerecht abgebogene, beabstandete Schenkel in Stecköffnungen an der Bodenplatte eingesteckt sind. Vorzugsweise kann auch der Tragring aus Kunststoff bestehen, so daß sich ein Wäschesackständer auf einfache Weise aus einem Kunststofftragring und einer Kunststoffbodenplatte, die sich in großen Stückzahlen durch Spritzguß herstellen lassen sowie zwei einfachen, L-förmig gebogenen Tragstreben zusammenstecken läßt.

Zu diesem Zweck können entsprechende Stecköffnungen am Befestigungsbereich des Tragrings und die Stecköffnungen für die waagerecht abgebogenen Schenkel der Tragstreben an der Bodenplatte vorgesehen sein. Da die Stecköffnungen am Tragring und an der Bodenplatte in zueinander senkrechten Ebenen liegen, ist auch bei einem einfachen, klemmenden Einstecken der senkrechten Enden der Tragstreben in die Stecköffnungen des Tragrings und der waagerecht abgebogenen Schenkel in die Stecköffnungen an der Bodenplatte bereits eine stabile, verwindungssteife Halterung des Tragrings an der Bodenplatte gegeben, die den Belastungen durch einen in den Tragring eingehängten, gefüllten Wäschesack ohne weiteres standhält. Die Steifigkeit der Verbindung läßt sich noch verbessern, wenn die Stecköffnungen am Befestigungsbereich des Tragrings in einer Ebene liegend unter einem Winkel schräg nach oben zueinander verlaufen, während die Stecköffnungen an der Bodenplatte parallel zueinander verlaufen. Hierdurch wird einerseits erreicht, daß die Tragstreben ebenfalls unter einem spitzen Winkel zueinander verlaufen, so daß eine Verformung in der durch die Tragstreben verlaufenden Ebene behindert wird und andererseits auch ein Verdrehen des Tragrings relativ zur Bodenplatte in parallelen Ebenen stark eingeschränkt wird. Im Hinblick auf die Festigkeit der Kunststoffbodenplatte, die ggf. faserverstärkt sein kann, genügt es, wenn die Länge der Schenkel der Tragstreben in den Stecköffnungen der Bodenplatte etwa einem Drittel der Länge der Bodenplatte entspricht.

Die Tragstreben können mit dem Tragring auch auf andere Weise als durch Stecköffnungen verbunden sein, z. B. können sie mit dem Tragring verschraubt sein.

Der aus Kunststoff, ggf. faserverstärkt, bestehende Tragring kann aus einem vorderen, schmalen Bereich, seitlichen sich zu dem hinteren, breiten Befestigungsbereich verbreiternden Wangen bestehen und am Befestigungsbereich angeordnete, etwa senkrechte Stecköffnungen für die oberen Enden der Tragstreben aufweisen. Auf diese Weise läßt sich der Tragring mit den Stecköffnungen einstückig als Spritzgußteil formen und läßt sich dadurch kostengünstig in Großserie herstellen.

Der Tragring kann auch in üblicher Weise aus Metall bestehen, wobei die oberen Enden der Tragstreben mit Seitenbereichen des Tragrings, untereinander durch eine zum Tragring beabstandete Querstrebe und die Querstrebe mit einem hinteren Bereich des Tragrings durch eine Stützstrebe verbunden sind. Die Stützstrebe dient zur Festigung des Scharniers eines Klappdeckels. Zur Transporterleichterung können der Tragring, die Tragstreben und die Bodenplatte auseinander genommen werden. Hierzu sind Steckverbindungen für die Tragstreben im Bereich unterhalb der Querstrebe angeordnet, während sich die waagerechten Schenkel aus den Stecköffnungen an der Bodenplatte herausziehen lassen.

Bei einer anderen Ausführungsform eines Tragrings aus Metall können die oberen Enden der Tragstreben untereinander, z. B. durch eine Querstrebe verbunden sein. Von der Verbindungsstelle, d. h. der Querstrebe kann in diesem Fall eine Stützstrebe zu einem hinteren Bereich des Tragrings verlaufen, wobei zur Stabilitätserhöhung, von der Stützstrebe ein U-förmiger, mit seinem hinteren Steg mit der Stützstrebe und mit seinen Schenkeln mit Seitenbereichen des Tragrings verbundener Bügel vorgesehen ist.

Auch in diesem Fall können entweder Steckverbindungen für die Tragstreben im Bereich unterhalb der Verbindungsstelle der Tragstreben oder eine undrehbare Steckverbindung für die Stützstrebe vorgesehen sein.

Mehrere Tragringe mit ihren Tragstreben können an einer entsprechend größeren Bodenplatte befestigt sein, um auf diese Weise einen Mehrfach-Wäschesackständer zu bilden. Es ist auch möglich, mehrere Einheiten aus einem Tragring, Tragstreben und einer Bodenplatte miteinander mittels Verbindungselementen zu einem Mehrfach-Wäschesackständer zu verbinden.

Die Verbindungselemente für mehrere Bodenplatten können aus wenigstens einem, durch Stecköffnungen in den Bodenplatten führbaren Verbindungsrohr bestehen. Vorzugsweise sind zwei parallele Verbindungsrohre vorhanden, durch die sich benachbarte Seitenkanten der Bodenplatten miteinander verschrauben lassen. Zusätzlich können noch weitere Verschraubungen zwischen den Seitenkanten vorgesehen sein.

Die Stecköffnungen und/oder Schraubenöffnungen in den Seitenkanten können als Befestigungslöcher für Befestigungszapfen bzw. -schrauben an seitlichen Stoßschutzleisten dienen.

Vorzugsweise sind die Stecköffnungen für die Schenkel der Tragstreben in einer Ebene oberhalb der Ebene der Stecköffnungen für die Verbindungsrohre angeordnet, wodurch die Steifigkeit der Verbindungen verbessert wird.

Die Stoßschutzleisten können wenigstens an den Seitenkanten der Bodenplatte angeordnet sein. Es ist auch möglich, einen U-förmigen, die Seitenkanten und die Hinterkante der Bodenplatte deckenden Stoßschutzbügel vorzusehen, der in gleicher Weise mittels Zapfen oder Mittelstiften in den Stecköffnungen für die Verbindungsrohre und/oder in den Schraublöchern in den Seitenkanten befestigt ist. Die Vorderkante der Bodenplatte kann ebenfalls eine Stoßschutzleiste aufweisen, so daß ein geschlossener Stoßschutzrahmen gebildet wird.

Die Bodenplatte kann im Bereich der Stecköffnungen für die Schenkel der Tragstreben Eckausschnitte aufweisen, so daß die mit einem verhältnismäßig großen Radius in die Tragstreben übergehenden, in die Bodenplatte gesteckten Schenkel nicht frei über die Hinterkante der Bodenplatte herausragen. Zusätzlich können ansteckbare Kunststofformteile als Stoßschutz für die aus den Stecköffnungen austretenden Tragstreben in den Eckausschnitten angeordnet sein.

Insbesondere bei der Ausführungsform des Wäschesackständers mit einem Tragring aus Kunststoff mit angeformten Stecköffnungen für die oberen Enden der Tragstreben ist es möglich, wenigstens eine Tragstrebe als Führung für eine Seilverbindung von einem Tretpedal an der Bodenplatte zu einer Hinterkante eines am Tragring angelenkten Klappdeckels zu nutzen. Das Tretpedal kann dabei vorteilhafterweise in eine Ausnehmung der Vorderkante der Bodenplatte angelenkt und das Seil mit Abstand oberhalb des Drehpunkts am Tretpedal und mit waagerechten Abstand zum Drehpunkt des Klappdeckels befestigt sein.

Um eine symmetrische Belastung sowohl des Tretpedals als auch des Klappdeckels zu erreichen, können je ein Seil durch je eine Tragstrebe parallel zueinander vom Tretpedal zum Klappdeckel geführt sein, und es können Silikonschläuche als reibungsarme Führungen für die Seilverbindung in den Tragstreben angeordnet sein.

Die Erfindung wird nachstehend anhand mehrerer, in der Zeichnung dargestellter Ausführungsbeispiele des näheren erläutert. In der Zeichnung zeigen:
- Fig. 1: eine perspektivische Ansicht eines Wäschesackständers gemäß einer ersten Ausführungsform,

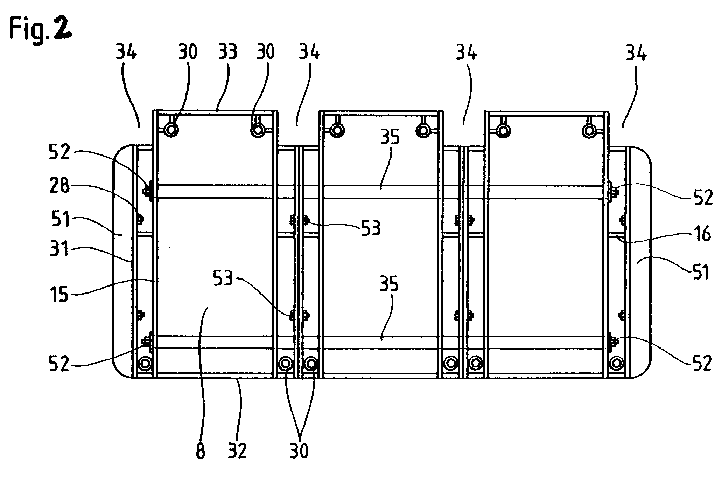

- Fig. 2: eine Unteransicht von drei miteinander zu einem Dreifachwäschesackständer verbundenen Bodenplatten,
- Fig. 3: eine perspektivische Ansicht eines Wäschesackständers gemäß einer dritten Ausführungsform,
- Fig. 4: eine perspektivische Ansicht eines Wäschesackständers gemäß einer weiteren Ausführungsform und
- Fig. 5: eine seitliche Schnittansicht einer Klappdeckelbetätigung.

Ein allgemein mit der Bezugsziffer 1 bezeichneter Tragring besteht aus einem vorderen, schmalen Bereich 2 sowie seitlichen, sich vom schmalen Bereich 2 zu einem Befestigungsbereich 4 verbreiternden Wangen 3. Der gesamte obere Bereich des Tragrings 1 weist schräg nach innen gerichtete Bereiche 7 auf, deren Breite der des vorderen, schmalen Bereichs 2 entspricht, der ebenfalls nach innen gerichtet ist. In den Wangen 3 sind Öffnungen 5 mit radialen, elastischen Zungen 6 angeordnet, in die um den Tragring 1 gestülpte Sackbereiche eingesteckt werden, wodurch der Sack am Tragring 1 gehalten wird. Die elastischen Zungen 6 dienen dabei als Ausziehsicherung für die Sackteile. Eine Bodenplatte 8 ist mit dem Tragring 1 über Tragstreben 9 verbunden. Die Bodenplatte ist mit Laufrollen 10 versehen, während am Tragring 1 ein Klappdeckel 11 mittels eines Scharniers 29 und einem mittels eines Anschraubblocks 22 gehaltenen Scharnierbügel 25 befestigt ist. Die Tragstreben 9 weisen im unteren Bereich etwa waagerecht abgebogene Schenkel 13 auf. Die oberen, im wesentlichen senkrecht stehenden Enden 12 der Tragstreben 9 sind in an den Tragring 1 angeformte, parallele Stecköffnungen 24 eingesteckt, während die waagerecht abgebogenen Schenkel 13 in waagerechte, parallele Stecköffnungen 14 an der Bodenplatte 8 eingesteckt sind. Im dargestellten Beispiel verlaufen die Tragstreben 9 schräg zueinander in einer Ebene und sind gegenüber der Bodenplatte 8 um einen Winkel von etwas weniger als 90° geneigt. Dies hat den Zweck, den gegenüber der Bodenplatte 8 kleineren Tragring 1 mittig über der Bodenplatte 8 anzuordnen, um dadurch eine ausreichende Kippsicherheit in allen Richtungen zu erreichen. Werden die Stecköffnungen 13, 24 so bemessen, daß sich die senkrechten oberen Enden 12 und die waagerechten Schenkel 13 der Tragstreben 9 klemmend einschieben lassen, ist eine ausreichend sichere Verbindung ohne zusätzliche Verschraubungen gegeben.

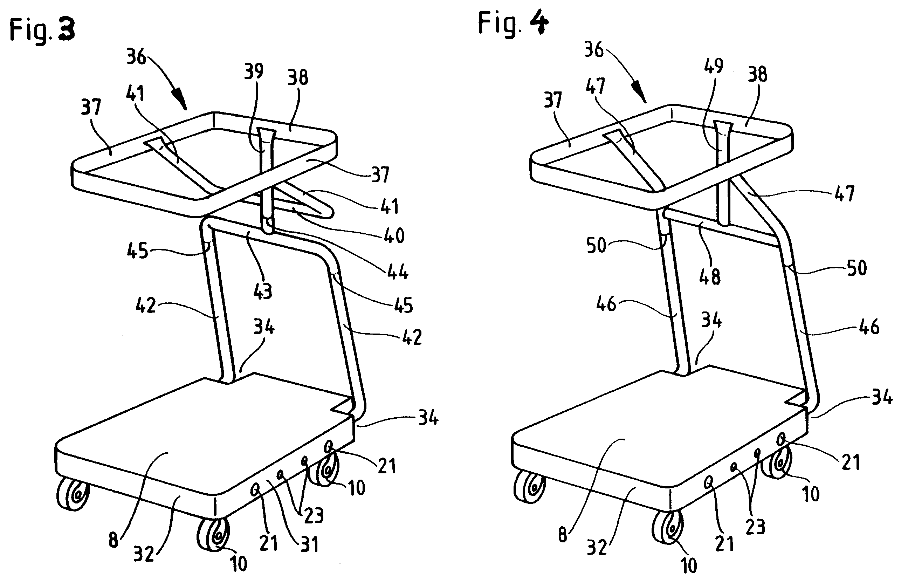

Um einen Mehrfach-Wäschesackständer zu bilden, können, wie in Fig. 4 dargestellt, mehrere Einheiten aus einem Tragring 1, den Tragstreben 9 und einer Bodenplatte 8 miteinander verbunden werden, indem in seitliche Stecköffnungen 21 benachbarter Bodenplatten 8 Verbindungsrohre 35, eingesteckt werden.

Zwei parallele Verbindungsrohre 35 sind durch die Stecköffnungen 21 von drei Bodenplatten 8 geführt. Parallel zu den Seitenkanten 31 verlaufen auf der Unterseite der Bodenplatten 8 Rippen 15, die einerseits zur Versteifung der Bodenplatten 8 dienen und andererseits einen Raum für Endverschraubungen 52 an den Verbindungsrohren 35 schaffen. Zwischen den Seitenkanten 31 und den Rippen 15 sind Verbindungsrippen 16 angeordnet, die ebenfalls Stecköffnungen 14 für die Schenkel 13 der Tragstreben 9 aufweisen. Diese Rippen 16 sind so angeordnet, daß die Schenkel 13 über etwa einem Drittel der Länge der Bodenplatten 8 gehalten sind.

In den Seitenkanten 31 können zusätzliche Schraublöcher 23 vorgesehen sein, die einerseits dazu dienen können, benachbarte Seitenkanten 31 mittels Verschraubungen 53 starr zu verbinden, die aber andererseits als Befestigungslöcher für seitliche Stoßschutzleisten 51 dienen können.

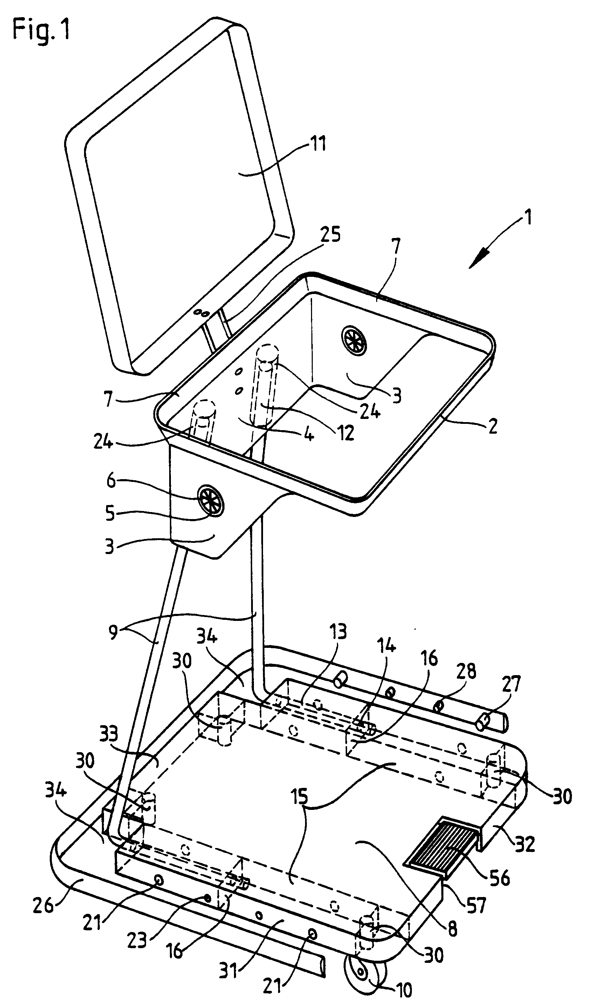

Während in Fig. 4 nur seitliche Stoßschutzleisten 51 vorgesehen sind, kann bei der Ausführungsform gemäß Fig. 1 ein U-förmiger Stoßschutzbügel 26 vorgesehen sein, der die Seitenkanten 31 und die Hinterkante 33 umfaßt. An den seitlichen Schenkeln des Stoßschutzbügels 26 sind Zapfen oder Gewindestifte 27, die den Stecköffnungen 21 angepaßt sind und/oder Zapfen oder Gewindestifte 28, die den Schraublöchern 23 angepaßt sind, angeordnet. Mit Hilfe dieser Zapfen oder Gewindestifte 27, 28 läßt sich der U-förmige Stoßschutzbügel 26 an der Bodenplatte 8 befestigen und bilden einen Stoßschutz für die aus den Stecköffnungen 14 austretenden Tragstreben 9, für die in der Bodenplatte 8 Eckausschnitte 34 angeordnet sind.

An der Vorderkante 32 der Bodenplatte 8 läßt sich ebenfalls eine Stoßschutzleiste anordnen, die im Bereich eines an einer Ausnehmung 55 der Bodenplatte 8 angeordneten Tretpedals 56 geteilt sein kann, im übrigen aber mit dem U-förmigen Stoßschutzbügel 26 einen praktisch geschlossenen Rahmen bilden kann.

Das Material der Stoßschutzleisten ist bevorzugterweise weicher als das der Bodenplatte 8, die selber aus hochfestem, scharfkantig geformten Kunststoff bestehen kann. Durch die scharfkantige Ausbildung der Schnittkante 31 lassen sich mehrere dieser Bodenplatten 8 auf einfache Weise gemäß Fig. 4 spielfrei miteinander verbinden.

In den Eckbereichen der Bodenplatte 8 sind Laufrollenbefestigungshülsen 30 angeformt, die über schematisch dargestellte Stege mit den entsprechenden Seitenbereichen der Bodenplatte 8 verbunden sind.

Es ist auch möglich, an einer vergrößerten Bodenplatte mehrere Tragstreben 9 mit Tragringen 1 anzustecken.

Die in einer Ebene liegenden Tragstreben 9 können auch schräg zueinander verlaufen und mit ihren oberen Enden 12 in entsprechend schräg verlaufende Stecköffnungen 24 eingesteckt werden. Hierdurch wird der Verformungswiderstand in der Ebene der Tragstreben 9 ganz erheblich vergrößert, ohne daß es dazu besonderer Verstärkungen im Bereich des Tragrings 1, der Bodenplatte 8 oder der Tragstreben 9 bedarf.

Bei den Ausführungsformen gemäß Fig. 3 und 4 sind Tragringe 36 aus Metall mit gleichbleibendem Querschnitt vorgesehen. Bei der Ausführungsform gemäß Fig. 3 sind die Tragstreben 42 mit Abstand zum Tragring 36 untereinander, z. B. mittels einer Querstrebe 43 miteinander verbunden. Vom mittleren Bereich der Querstrebe 43 erstreckt sich eine senkrechte Stützstrebe 39 bis zu einem hinterem Bereich 38 des Tragrings 36 und ist dort angeschweißt oder angeschraubt. Zur Verbesserung der Stabilität des Tragrings 36 ist ein aus einem Steg 40 und seitlichen Schenkeln 41 bestehender U-förmiger Bügel an Seitenbereichen 37 geschraubt oder angeschweißt und zur Stützstrebe 39 geführt. Der Steg 40 ist mit Abstand zum hinteren Bereich 38 des Tragrings 36 mit der Stützstrebe 39 durch Schweißen oder Schrauben verbunden.

Bei der Ausführungsform gemäß Fig. 4 sind die Tragstreben 46 schräg nach vorn bis zu den Seitenbereichen 37 des Tragrings 36 geführt und dort durch Schweißen oder Schrauben befestigt. Auch in diesem Fall sind die Tragstreben 46 durch eine Querstrebe 48 miteinander verbunden. Von dieser Querstrebe 48 ist eine senkrechte Stützstrebe 49 zum hinteren Bereich 38 des Rings 36 geführt.

Um bei den Ausführungsformen gemäß Fig. 3 und 4 das Transportvolumen möglichst gering halten zu können, sind Steckverbindungen 45, 50 in den Tragstreben 42, 46 oder beim Ausführungsbeispiel gemäß Fig. 3 eine undrehbare Steckverbindung 44 in der Stützstrebe 39 angeordnet, so daß sich der Tragring 36 von den Stützstreben 42, 46 abziehen läßt, wonach sich diese Stützstreben 42, 46 aus den Stecköffnungen der Bodenplatte 8 herausziehen lassen und raumsparend verpackt werden können.

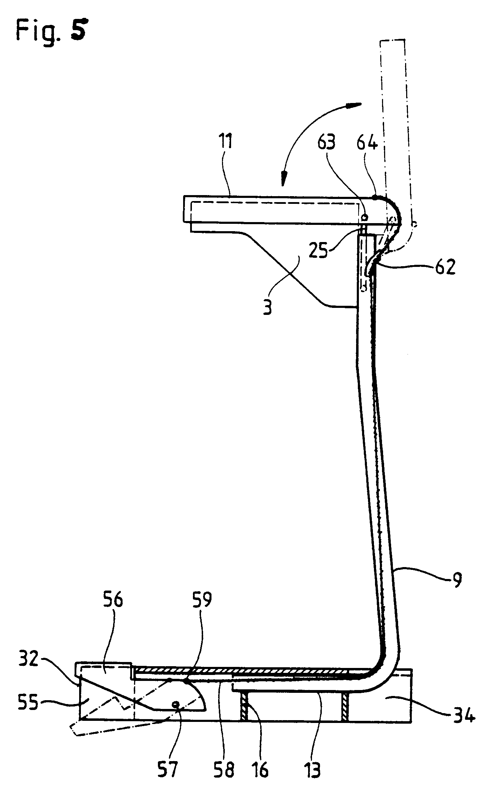

In Fig. 5 ist eine Tretpedalbetätigung für den Klappdeckel 11 dargestellt. Das Tretpedal 56, das in der Ausnehmung 55 der Bodenplatte 8 angeordnet ist, weist einen Drehpunkt 57 auf, der sich im Bereich der Unterkante der Bodenplatte befindet. Beabstandet von diesem Drehpunkt 57 ist mindestens ein Seil 58 an einem Befestigungspunkt 59 befestigt. Dieses Seil 58 ist durch den Schenkel 13 und die Tragstrebe 9 bis in den Bereich des Tragrings 1 geführt. Hier ist das Seil nach rückwärts aus dem oberen Ende 12 der Tragstrebe 9 herausgeführt und in einem Befestigungspunkt 64 an der Oberseite des Klappdeckels 11 befestigt. Dieser Befestigungspunkt 64 liegt beabstandet oberhalb des Drehpunkts 63 des Klappdeckels 11. Wird das Tretpedal 56 nach unten in die gestrichelte Stellung bewegt, wird das Seil 58 im Schenkel 13 nach vorn und in der Tragstrebe 9 nach unten gezogen, wodurch der Klappdeckel 11 in die gestrichelt gezeichnete, geöffnete Stellung gebracht wird. Die Führung 62 kann durch die Tragstrebe 9 und den Schenkel 13 bis in den Bereich des Befestigungspunktes 59 für das Seil 58 geführt sein, um eine reibungs- und verschleißarme Führung des Seils 58 zu gewährleisten.

Je ein Seil 58 kann durch je eine Tragstrebe 9 geführt sein, um eine symmetrische Betätigung des Klappdeckels 11 zu gewährleisten. Vorzugsweise kann zwischen dem Tretpedal 56 und dem Klappdeckel 11 eine nicht dargestellte, kräftige Zugfeder als Überlastsicherung angeordnet sein.

Der erfindungsgemäße Wäschesackständer läßt sich einfach und kostengünstig herstellen, baukastenartig auch zu einem Mehrfach-Wäschesackständer zusammensetzen und aufgrund seines geringen Gewichts und seines vorteilhaften Aufbaus leicht handhaben.

## Patentansprüche

1. Wäschesackständer mit
- einem Tragring (1, 36), und
- einer Bodenplatte (8) aus Kunststoff **gekennzeichnet durch** zwei L-förmige, etwa senkrechte Tragstreben (9, 42, 46) deren obere Enden (12, 47) mit dem Tragring (1, 36) verbunden sind und deren untere, etwa waagerecht abgebogene, beabstandete Schenkel (13) in erste Stecköffnungen (14) an der Bodenplatte (8) eingesteckt sind.

2. Wäschesackständer nach Anspruch 1, **dadurch gekennzeichnet,** daß die Länge der Schenkel (13) in den ersten Stecköffnungen (14) mindestens einem Drittel der Länge der Bodenplatte (8) entspricht.

3. Wäschesackständer nach Anspruch 1 oder 2, **dadurch gekennzeichnet,** daß die oberen Enden der Tragstreben (9) in Stecköffnungen (24) an einem Befestigungsbereich (4) des Tragrings (1) eingesteckt sind.

4. Wäschesackständer nach Anspruch 3, **dadurch gekennzeichnet,** daß die Stecköffnungen (24) des Tragrings (1) in einer Ebene liegend unter einem Winkel schräg nach oben zueinander verlaufen.

5. Wäschesackständer nach Anspruch 1 oder 2, **dadurch gekennzeichnet,** daß die oberen Enden (47) der Tragstreben (46) mit Seitenbereichen (37) des Tragrings (36), untereinander durch eine zum Tragring (36) beabstandete Querstrebe (48) und die Querstrebe (48) mit einem hinteren Bereich (38) des Tragrings (36) durch eine Stützstrebe (49) verbunden sind.

6. Wäschesackständer nach Anspruch 5, **gekennzeichnet durch** eine Steckverbindung (50) für die Tragstreben (46) im Bereich unterhalb der Querstrebe (48).

7. Wäschesackständer nach Anspruch 1 oder 2, **dadurch gekennzeichnet,** daß die oberen Enden der Tragstreben (42) untereinander verbunden sind und von der Verbindungsstelle bzw. Querstrebe (43) eine Stützstrebe (39) zu einem hinteren Bereich (38) des Tragrings (36) verläuft.

8. Wäschesackständer nach Anspruch 7, **gekennzeichnet durch** einen U-förmigen, mit seinem hinteren Steg (40) mit der Stützstrebe (39) und mit seinen Schenkeln (41) mit Seitenbereichen (37) des Tragrings (36) verbundenen Bügel.

9. Wäschesackständer nach Anspruch 8, **gekennzeichnet durch** eine Steckverbindung (45) für die Tragstreben (42) im Bereich unterhalb der Verbindungsstelle bzw. Querstrebe (43) der Tragstreben (42).

10. Wäschesackständer nach Anspruch 8, **gekennzeichnet durch** eine undrehbare Steckverbindung (44) für die Stützstrebe (39).

11. Wäschesackständer nach einem oder mehreren der Ansprüche 7 bis 10, **dadurch gekennzeichnet,** daß unter der Bodenplatte (8) Laufrollen (10) angeordnet sind, deren Befestigung als Halterung (20) für die Schenkel (13) und/oder die Querstrebe (43) der Tragstreben (9, 42) dient.

12. Wäschesackständer nach einem oder mehreren der Ansprüche 1 bis 11, **dadurch gekennzeichnet,** daß der Tragring (1) aus einem vorderen, schmalen Bereich (2), seitlichen, sich zu dem hinteren, breiten Befestigungsbereich (4) verbreiternden Wangen (3) besteht und am Befestigungsbereich (4) angeordnete, etwa senkrechte Stecköffnungen (24) für die oberen Enden (12) der Tragstreben (9) aufweist.

13. Wäschesackständer nach einem oder mehreren der Ansprüche 1 bis 12, **dadurch gekennzeichnet,** daß mehrere Tragringe (1) mit ihren Tragstreben (9) an einer Bodenplatte befestigt und/oder mehrere Bodenplatten (8) miteinander mittels Verbindungselementen (35, 53) zu einer Einheit verbunden sind.

14. Wäschesackständer nach Anspruch 13, **dadurch gekennzeichnet,** daß die Verbindungselemente aus wenigstens einem, durch weitere Stecköffnungen (21) in den Bodenplatten (8) führbaren Verbindungsrohr (35) bestehen.

15. Wäschesackständer nach Anspruch 13 oder 14, **dadurch gekennzeichnet,** daß benachbarte Seitenkanten (31) der Bodenplatten (8) miteinander verschraubt sind.

16. Wäschesackständer nach Anspruch 14 oder 15, **dadurch gekennzeichnet,** daß die weiteren Stecköffnungen (21) und/oder Schraubenöffnungen (23) als Befestigungslöcher für Befestigungszapfen bzw. -schrauben (27, 28) an seitlichen Stoßschutzleisten (26, 51) dienen.

17. Wäschesackständer nach einem oder mehreren der Ansprüche 14 bis 16, **dadurch gekennzeichnet,** daß die ersten Stecköffnungen (14) für die Schenkel (13) der Tragstreben (9, 42, 46) in einer Ebene oberhalb der Ebene der weiteren Stecköffnungen (21) für die Verbindungsrohre (35) angeordnet sind.

18. Wäschesackständer nach einem oder mehreren der Ansprüche 14 bis 17, **gekennzeichnet durch** wenigstens an den Seitenkanten (31) der Bodenplatte (8) angeordnete Stoßschutzleisten (26, 51).

19. Wäschesackständer nach Anspruch 18, **dadurch gekennzeichnet,** daß die Stoßschutzleisten mittels Zapfen oder Gewindestiften in den weiteren Stecköffnungen (21) für die Verbindungsrohre (35) und/oder in Schraubenlöchern (23) in den Seitenkanten (31) befestigt sind.

20. Wäschesackständer nach Anspruch 18 oder 19, **gekennzeichnet durch** einen U-förmigen die Seitenkanten (31) und die Hinterkante (33) der Bodenplatte (8) abdeckenden Stoßschutzbügel (26).

21. Wäschesackständer nach einem oder mehreren der Ansprüche 1 bis 20, **dadurch gekennzeichnet,** daß die Bodenplatte im Bereich der ersten Stecköffnungen (14) für die Schenkel (13) der Tragstreben (9, 42, 46) Eckausschnitte (34) aufweist und ansteckbare Kunststofformteile als Stoßschutz für die aus den ersten Stecköffnungen (14) austretenden Tragstreben (9, 42, 46) in den Eckausschnitten (34) angeordnet sind.

22. Wäschesackständer nach den Ansprüchen 2 und 3 oder 4, **gekennzeichnet durch** wenigstens eine Seilverbindung (58) durch wenigstens eine Tragstrebe (9) von einem Tretpedal (56) der Bodenplatte (8) zu einer Hinterkante eines am Tragring (1) angelenkten Klappdeckels (11).

23. Wäschesackständer nach Anspruch 22, **dadurch gekennzeichnet,** daß das Tretpedal (56) in einer Ausnehmung (55) der Vorderkante (32) der Bodenplatte (8) angelenkt und das Seil (58) mit Abstand oberhalb des Drehpunkts (57) am Tretpedal (56) und mit waagerechten Abstand zum Drehpunkt (63) des Klappdeckels (11) befestigt ist.

24. Wäschesackständer nach Anspruch 22 oder 23, **dadurch gekennzeichnet,** daß je ein Seil (58) durch je eine Tragstrebe (9) vom Tretpedal (56) zum Klappdeckel (11) geführt ist.

25. Wäschesackständer nach Anspruch 22, 23 oder 24, **gekennzeichnet durch** in den Tragstreben (9) angeordnete Silikonschläuche (62) als reibungsarme Führungen für die Seilverbindung (58).

## Claims

1. Laundry bag stand having
- a bearing ring (1, 36) and
- a base plate (8) made of plastics material, characterised by two L-shaped, substantially perpendicular bearing struts (9, 42, 46), the upper ends (12, 47) of which are connected to the bearing ring (1, 36) and the lower limbs (13) of which are bent off so as to be substantially horizontal and are inserted into first plug-type openings (14) on the base plate (8).

2. Laundry bag stand according to claim 1, characterised in that the length of the limbs (13) in the first plug-type openings (14) corresponds to at least one third of the length of the base plate (8).

3. Laundry bag stand according to claim 1 or 2, characterised in that the upper ends of the bearing struts (9) are inserted into plug-type openings (24) on a fastening region (4) of the bearing ring (1).

4. Laundry bag stand according to claim 3, characterised in that the plug-type openings (24) of the bearing ring (1) extend towards each other in one plane at an upwardly sloping angle.

5. Laundry bag stand according to claim 1 or 2, characterised in that the upper ends (47) of the bearing struts (46) are connected to side regions (37) of the bearing ring (36) and are connected to one another by a cross strut (48) which is at a distance from the bearing ring (36), and the cross strut (48) is connected to a rear region (38) of the bearing ring (36) by a support strut (49).

6. Laundry bag stand according to claim 5, characterised by a plug-type connection (50) for the bearing struts (46) in the region beneath the cross strut (48).

7. Laundry bag stand according to claim 1 or 2, characterised in that the upper ends of the bearing struts (42) are connected to one another and a support strut (39) extends from the place of connection, more particularly the cross strut (43), to a rear region (38) of the bearing ring (36).

8. Laundry bag stand according to claim 7, characterised by a U-shaped hoop, the rear bar (40) of which is connected to the support strut (39) and the limbs (41) of which are connected to side regions (37) of the bearing ring (36).

9. Laundry bag stand according to claim 8, characterised by a plug-type connection (45) for the bearing struts (42) in the region beneath the place of connection, more particularly the cross strut (43), of the bearing struts (42).

10. Laundry bag stand according to claim 8, characterised by an non-rotatable plug-type connection (44) for the support strut (39).

11. Laundry bag stand according to one or more of the claims 7 to 10, characterised in that arranged beneath the base plate (8) there are castors (10), the fastening of which is used as a holder (20) for the limbs (13) and/or the cross strut (43) of the bearing struts (9, 42).

12. Laundry bag stand according to one or more of the claims 1 to 11, characterised in that the bearing ring (1) consists of a front narrow region (2), lateral cheeks (3) which widen towards the rear broad fastening region (4), and has arranged on the fastening region (4) substantially perpendicular plug-type openings (24) for the upper ends (12) of the bearing struts (9).

13. Laundry bag stand according to one or more of the claims 1 to 12, characterized in that the bearing struts (9) of a plurality of bearing rings (1) are fastened to one base plate and/or a plurality of base plates (8) are connected to each other by means of connection elements (35, 53) to form one unit.

14. Laundry bag stand according to claim 13, characterised in that the connection elements consist of at least one connection tube (35), which can be guided through further plug-type openings (21) in the base plates (8).

15. Laundry bag stand according to claim 13 or 14, characterised in that adjacent side edges (31) of the base plates (8) are screwed together.

16. Laundry bag stand according to claim 14 or 15, characterised in that the further plug-type openings (21) and/or screw-type openings (23) are used as fastening holes for fastening pegs or fastening screws (27, 28) on lateral impact protection strips (26, 51).

17. Laundry bag stand according to one or more of the claims 14 to 16, characterised in that the first plug-type openings (14) for the limbs (13) of the bearing struts (9, 42, 46) are arranged in a plane above the plane of the further plug-type openings (21) for the connection tubes (35).

18. Laundry bag stand according to one or more of the claims 14 to 17, characterised by impact protection strips (26, 51) arranged at least on the side edges (31) of the base plate (8).

19. Laundry bag stand according to claim 18, characterised in that by means of pegs or headless pins the impact protection strips are fastened in the further plug-type openings (21) for the connection tubes (35) and/or in screw holes (23) in the side edges (31).

20. Laundry bag stand according to claim 18 or 19, characterised by a U-shaped impact protection hoop (26) which covers the side edges (31) and the rear edge (33) of the base plate (8).

21. Laundry bag stand according to one or more of the claims 1 to 20, characterised in that in the region of the first plug-type openings (14) for the limbs (13) of the bearing struts (9, 42, 46), the base plate has corner cutouts (34), and attachable plastics moulded parts are arranged in the corner cutouts (34) as impact protection for the bearing struts (9, 42, 46) which emerge from the first plug-type openings (14).

22. Laundry bag stand according to claims 2 and 3 or 4, characterised by at least one cable connection (58) through at least one bearing strut (9) from a foot pedal (56) of the base plate (8) to a rear edge of a hinged lid (11) which is hinged on the bearing ring (1).

23. Laundry bag stand according to claim 22, characterised in that the foot pedal (56) is hinged in a recess (55) of the front edge (32) of the base plate (8) and the cable (58) is fastened at a distance above the point of rotation (57) at the foot pedal (56) and at a horizonal distance from the point of rotation (63) of the hinged lid.

24. Laundry bag stand according to claim 22 or 23, characterised in that a respective cable (58) is guided through a respective bearing strut (9) from the foot pedal (56) to the hinged lid (11).

25. Laundry bag stand according to claim 22, 23 or 24, characterised by silicone tubes (62) arranged in the bearing struts (9) as low-friction guides for the cable connection (58).

## Revendications

1. Bâti de sac à linge comportant
- un anneau de support (1, 36) et
- une plaque de fond (8) en matière plastique caractérisé par deux entretoises de support (9, 42, 46) à peu près verticales, en L, dont les extrémités supérieures (12, 47) sont reliées à l'anneau de support (1, 36) et dont les branches inférieures (13), espacées, recourbées à peu près horizontalement, sont enfilées dans des premières ouvertures d'emboîtement (14) sur la plaque de fond (8).

2. Bâti de sac à linge selon la revendication 1, caractérisé en ce que la longueur des branches (13) dans les premières ouvertures à emboîtement (14) correspond au moins à un tiers de la longueur de la plaque de fond (8).

3. Bâti de sac à linge selon la revendication 1 ou 2, caractérisé en ce que les extrémités supérieures des entretoises de support (9) sont enfilées dans des ouvertures à emboîtement (24), sur une zone de fixation (4) de l'anneau de support (1).

4. Bâti de sac à linge selon la revendication 3, caractérisé en ce que les ouvertures à emboîtement (24) de l'anneau de support (1) s'étendent dans un plan, obliquement vers le haut, les unes vers les autres, en formant un angle.

5. Bâti de sac à linge selon la revendication 1 ou 2, caractérisé en ce que les extrémités supérieures (47) des entretoises de support (46) sont reliées avec des zones latérales (37) de l'anneau de support (36), sont reliées entre elles par une traverse (48) espacée de l'anneau de support (36) et la traverse (48) est reliée à une zone arrière (38) de l'anneau de support (36) par une entretoise de soutien (49).

6. Bâti de sac à linge selon la revendication 5, caractérisé par un assemblage à emboîtement (50) pour les entretoises de support (46), dans la zone située au-dessous de la traverse (48).

7. Bâti de sac à linge selon la revendication 1 ou 2, caractérisé en ce que les extrémités supérieures des entretoises de support (42) sont reliées entre elles et du point d'assemblage ou de la traverse (43), une entretoise de soutien (39) s'étend vers la zone arrière (38) de l'anneau de support (36).

8. Bâti de sac à linge selon la revendication 7, caractérisé par un étrier en U relié par son dos arrière (40) avec l'entretoise de soutien (39) et par ses branches (41) avec des zones latérales (37) de l'anneau de support (36).

9. Bâti de sac à linge selon la revendication 8, caractérisé par un assemblage à emboîtement (45) pour les entretoises de support (42) dans la zone située au-dessous du point d'assemblage ou de la traverse (43) des entretoises de support (42).

10. Bâti de sac à linge selon la revendication 8, caractérisé par un assemblage à emboîtement (44) non tournant pour l'entretoise de soutien (39).

11. Bâti de sac à linge selon une ou plusieurs des revendications 7 à 10, caractérisé en ce qu'au-dessous de la plaque de fond (8) sont placées des roulettes (10) dont la fixation sert de support (20) aux branches et/ou aux traverses (43) des entretoises de support (9, 42).

12. Bâti de sac à linge selon une ou plusieurs des revendications 1 à 11, caractérisé en ce que l'anneau de support (1) est constitué d'une zone (2) étroite, avant, de côtes (3) s'élargissant vers la zone de fixation (4) arrière, large, et présente des ouvertures d'emboîtement (24) placées sur la zone de fixation (4) à peu près verticale, pour les extrémités supérieures (12) des entretoises de support (9).

13. Bâti de sac à linge selon une ou plusieurs des revendications 1 à 12, caractérisé en ce que plusieurs anneaux de support (1) sont fixés avec leurs entretoises de support (9) sur une plaque de fond et/ou plusieurs plaques de fond (8) sont reliées entre elles au moyen d'éléments d'assemblage (35, 53) pour former une unité .

14. Bâti de sac à linge selon la revendication 13, caractérisé en ce que les éléments d'assemblage sont constitués d'au moins un tube d'assemblage (35) à guider à traverse d'autres ouvertures d'emboîtement (21), dans las plaques de fond (8).

15. Bâti de sac à linge selon la revendication 13 ou 14, caractérisé en ce que des bords latéraux (31) voisins des plaques de fond (8) sont vissés entre eux.

16. Bâti de sac à linge selon la revendication 14 ou 15, caractérisé en ce que les autres ouvertures d'emboîtement (21) et/ou ouvertures de vis (23) servent de trous de fixation pour des tenons de fixation des vis de fixation (27, 28) sur des baguettes pare-chocs latérales (26, 51).

17. Bâti de sac à linge selon une ou plusieurs des revendications 1 4 à 16, caractérisé en ce que les premières ouvertures d'emboîtement (14) pour les branches (13) des entretoises de support (9, 42, 46) sont placées dans un plan au-dessous du plan des autres ouvertures d'emboîtement (21) pour les tubes d'assemblage (35).

18. Bâti de sac à linge selon une ou plusieurs des revendications 14 à 17, caractérisé par des baguettes pare-chocs (26, 51) placées au moins sur les bords latéraux (31) de la plaque de fond (8).

19. Bâti de sac à linge selon la revendication 18, caractérisé en ce que les baguettes pare-chocs sont fixées au moyen de tenons ou de tiges filetées dans les autres ouvertures d'emboîtement (21) pour les tubes d'assemblage (35) et/ou dans des trous de vis (23), dans les bords latéraux (31).

20. Bâti de sac à linge selon la revendication 18 ou 19, caractérisé par un étrier pare-chocs (26) en U, recouvrant les bords latéraux (31) et le bord arrière (33) de la plaque de fond (8).

21. Bâti de sac à linge selon une ou plusieurs des revendications 1 à 20, caractérisé en ce que la plaque de fond présente, dans la zone des premières ouvertures d'emboîtement (14), des découpes d'angle (34) pour les branches (13) des entretoises de support (9, 42, 46), et des pièces de forme en matière plastique à rapporter, servant de pare-chocs, pour les entretoises de support (9, 42, 46), ressortant des premières ouvertures d'emboîtement (14), sont placées dans les découpes d'angle (34).

22. Bâti de sac à linge selon la revendication 2, 3 ou 4, caractérisé par au moins une liaison par câble (58) pour au moins une entretoise de support (9), d'une pédale (56) de la plaque de fond (8) vers un bord arrière d'un couvercle rabattable (11) articulé sur l'anneau de support (1).

23. Bâti de sac à linge selon la revendication 22, caractérisé en ce que la pédale (56) s'articule dans un évidement (55) du bord avant (32) de la plaque de fond (8) et la câble (58) est fixé à distance, au-dessus du point de rotation (57), sur la pédale (56) et à distance horizontale du point de rotation (63) du couvercle rabattable (11).

24. Bâti de sac à linge selon la revendication 22 ou 23, caractérisé en ce qu'un câble (58) respectif passe à travers une entretoise de support (9) respective, de la pédale (56) au couvercle rabattable (11).

25. Bâti de sac à linge selon la revendication 22, 23 ou 24, caractérisé par des tuyaux en silicone (62) placés dans les entretoises de support (9), servant de guidages peu sujets à friction pour la liaison par câble (58).
